# EUROPEAN PATENT APPLICATION

(11) **EP 0 596 605 A1**
(43) Date of publication of application: **11.05.1994**
(21) Application number: 93308012.9
(22) Date of filing: 08.10.1993
(51) Int. Cl.: G01N 21/05

(54) **Precision gas cell for infrared spectrometers and the like**

(30) Priority: 06.11.1992 US 972762
(71) Applicant: NICOLET INSTRUMENT CORPORATION, Madison, WI 53711-4495 (US)
(72) Inventor: Miller, Robert A., Madison, Wisconsin 53716 (US); Petersen, Joel Vincent, Madison, Wisconsin 53713 (US); Parker, Donald C., Brooklyn, Wisconsin 53521 (US); Ressler, Gregg, Madison, Wisconsin 53711 (US)
(74) Representative: Senior, Alan Murray

(57) **Abstract**

A gas cell for measuring the chemical constituents of a gas sample generally includes a central body portion having a hollow interior and first and second end plates sealing off the hollow interior. Each end plate includes an integrally formed concave mirror for reflecting an optical beam back and forth through the interior of the gas cell. Typically, one end plate includes two objective mirrors while the other end plate includes a field mirror optically oriented towards the objective mirrors for reflecting the optical beam therebetween. One of the end plates includes a pair of windows, one of which is used to introduce the optical beam into the gas cell interior and the other through which the optical beam exits after making multiple passes between the mirrors. The absorption spectra of the various chemical constituents within the gas sample can be measured by analyzing the exiting beam in a conventional spectrometer. The central body portion includes a pair of datum surfaces which abut against reference surfaces on the end plates to ensure that the distance between and the orientation of the mirrors remains constant, even when the end plates are removed for servicing or exchanged with other end plates having mirrors with different optical orientations. A gas inlet passageway and a gas outlet passageway communicate with the interior of the gas cell so that sample gas may be introduced into and removed from the cell.

## Description

### FIELD OF THE INVENTION

This invention pertains generally to the field of optics and optical systems, and particularly to gas cells in which an optical beam is used to measure the composition of gases.

### BACKGROUND OF THE INVENTION

Precision gas cells are used to detect the various gases and vapors in a particular sample gas by passing an optical beam, such an infrared beam, through the gas sample and measuring the absorption spectra of the constituents. For example, water vapor, carbon dioxide, and ozone are three infrared absorbers that can be analyzed by their infrared spectra if the infrared beam is passed along a path of sufficient length through the sample containing these constituents. The precision gas cell is typically used in conjunction with a spectrometer, such as a Fourier transform infrared (FTIR) spectrometer, which includes a radiation detector for detecting the infrared beam once it leaves the gas cell and electronic equipment for analyzing the information from the detected infrared beam.

Some gas cells allow the infrared beam to pass through the gas sample over a relatively long distance to increase the relative absorption of the wave lengths of the infrared beam within a relatively small cell space. The path length over which the beam travels is made longer by reflecting or folding the beam back and forth through the interior of the gas cell between mirrors disposed within the gas cell.

Generally, gas cells are tubular and have sealed ends on which internal mirrors are mounted and optically oriented towards each other. An inlet and outlet are disposed through one of the gas cell ends so the gas sample may be introduced into the cell and removed after the testing is completed. The mirrors are spherical concave mirrors having the same radius of curvature and are usually arranged in what is known as a White cell format. Two objective mirrors are disposed at one end of the gas cell while a field mirror is disposed at the other end of the gas cell. A focused infrared beam is introduced through a window disposed at the field mirror end and directed, diverging, against the first objective mirror at the other end of the gas cell. In a simple four pass gas cell, this first objective mirror reflects and focuses the infrared beam back to the field mirror, which, in turn, reflects the beam, diverging, to the second objective mirror which then directs the beam out of the gas cell through an outlet window disposed on the field mirror end. To obtain optimal accuracy, the focal lengths of the mirrors must be coincident with the distance at which the opposing mirrors are located.

In analyzing some gas samples, it is desirable to pass the infrared beam along a much greater path length. To do so, the mirrors must be adjusted so their optical orientation allows the optical beam to be reflected back and forth within the gas cell multiple times before exiting. In this situation, the infrared beam is focused at a plane which is co-planar to the surface of the field mirror and from there the beam diverges to the first objective mirror, which focuses the beam on the field mirror off center. The field mirror then returns a diverging beam to the second objective mirror which instead of directing the beam out of the cell, directs it back to the field mirror at a point spaced from the point at which the first objective mirror focused the beam. The first objective mirror again redirects the beam to the field mirror which again returns the beam to the second objective mirror, which then either directs the beam out of the cell or back to the field mirror depending on the optical orientation of the mirrors. By properly adjusting the mirrors, the infrared beam can be directed through the gas cell over a wide range of path lengths.

Today, gas cells are being used with spectrometers in quantitative analysis as well as qualitative analysis of gas samples. For example, gas cells are used to compare the relative amounts of chemical constituents within a sample as well as simply to determine the presence of a given chemical within the sample. To obtain consistent quantitative results, it is necessary that the path length through the cell be consistent between different samples having the same constituent. At the same time, the path length must be adjustable for testing samples having different infrared absorptivities.

In existing gas cells, the mirrors are adjustable so that the path length through which the optical beam passes may be adjusted as necessary for analyzing the gas samples having different chemical compositions. Typically, the mirrors are mounted on adjustable mirror mounts made of various metals. The mirror mounts extend internally from the ends of the gas cell so that the mirrors have room for movement when adjusted. However, this leaves dead space behind the mirrors where the sample gas can collect, sometimes making it difficult to completely remove the sample or at other times leading to condensation behind the mirrors. In either event, this can lead to contamination of the next gas sample which is introduced into the gas cell, compromising the accuracy of the results. Also, the sample gas that collects behind the mirrors is not exposed to the optical beam, similarly leading to less accurate test results.

If the mirrors are adjusted, the distance between the mirrors may be altered slightly from one sample to another following the adjustment. This reduces the quantitative accuracy of the gas cell since it is necessary to have equal path lengths when comparing the relative absorbance of one sample containing a particular chemical constituent with another sample having the same constituent. Particularly with high numbers of passes, a slightly greater distance between mirrors will result in more absorbance at the peak of the absorbance spectrum of the second sample constituent even if the quantitative concentration of the constituent in the two samples is the same. In practice, such variability has seriously hampered prior efforts to use such cells for quantitative analysis.

Adjustable mirrors also present a number of other problems. Adjustment of the mirrors requires a skilled technician to obtain the desired number of optical beam passes as well as to maintain the desired distance between the mirrors. Also, adjustable mirrors are typically mounted to the ends of the gas cell by pivots and springs. Such pivots and springs are susceptible to vibration, and since gas cells are usually connected to gas pumps, which vibrate, the mirrors tend to ring and vibrate excessively. The mirror mounts also require lubrication to work effectively, but lubricants can contaminate highly reactive samples, once again leading to less accurate results. It would be advantageous to have a reliable sample gas cell that simplified manufacture, set up, and field service. This would allow an unskilled operator to use the gas cell and to make changes in the path length over which the optical beam is directed.

The sample gas is introduced into the gas cell through an inlet orifice extending through one of the gas cell walls. From this inlet, the sample moves throughout the interior of the gas cell, however, the distribution is not necessarily uniform since the entire sample enters the gas cell from one point along its external wall. It would be advantageous to introduce the sample gas so as more uniformly to disperse the sample throughout the interior of the gas cell.

As stated earlier, the optical beam passes through optically dense windows to enter the gas cell. Not all window materials are chemically resistive to the components being measured in the gas cell. It would be desirable that the window assemblies be designed in a modular fashion so that they could be easily exchanged with a window assembly that would be resistive to the compounds being analyzed. In addition, since these window materials may have differing indices of refraction, it would be desirable if the window assemblies were designed so that the window thickness could be adjusted to compensate for the change in index of refraction, thereby enabling the window to maintain the same optical thickness regardless of the window material chosen.

### SUMMARY OF THE INVENTION

In accordance with the present invention, a gas cell is provided for use with a spectrometer to allow measurement of the chemical constituents of a gas sample. Qualitative as well as quantitative analysis of the sample constituents may be made by passing an optical beam, such as an infrared beam, through the gas sample in the cell and measuring the absorbance spectra of the sample constituents.

The gas cell comprises a central body portion having a longitudinal axis, a first end having a substantially planar first datum surface, and a second end having a substantially planar second datum surface. A hollow interior extends through the body portion along the axis. A first end plate is disposed in sealing engagement with the body portion and has a reference surface abutted against the first datum surface. First and second integral concave objective mirrors are formed in the first end plate at a predetermined location with respect to the reference surface and thus fixed in position relative to the first datum surface. A second end plate is disposed in sealing engagement with the body portion and has a reference surface abutted against the second datum surface. A single field mirror is formed in the second end plate at a predetermined location with respect to the reference surface and thus fixed in position relative to the second datum surface. Thus, the objective mirrors and field mirror are optically oriented towards one another at a fixed distance.

A gas inlet passageway and a gas outlet passageway are disposed in the gas cell, preferably in one of the end plates, to facilitate introduction of a sample gas into the hollow interior and to allow removal of the gas once the sample analysis is complete.

An inlet window is disposed in the second end plate and allows the optical beam to be directed into the gas cell towards the first objective mirror. This objective mirror then reflects the beam towards the field mirror which, in turn, reflects the beam towards the second objective mirror which, depending on its optical orientation, either reflects the beam out of the gas cell through an outlet window or redirects the beam towards the field mirror for multiple passing.

Since the mirrors are integrally formed in the end plates and the reference surfaces in the end plates abut against the first and second datum surfaces, the distance between mirrors is precisely determined even if the end plates are removed for servicing or different end plates having mirrors with different optical orientations are substituted. The end plates are preferably attached to the body portion by fasteners which are received in the body portion so that an unskilled operator can simply unfasten each of the end plates, substitute different end plates, and refasten them. This allows consistent and precise testing of samples having the same chemical constituent.

Additionally, the invention provides for a gas distribution tube for uniformly distributing the gas sample throughout the interior of the gas cell. The gas distribution tube extends into the interior of the gas cell and has an internal passage. An attachment end allows the tube to be connected to the gas inlet so that sample gas may flow into the internal passage. The tube is blocked at the distal end of the tube while a plurality of radial apertures in the tube uniformly distribute the gas sample throughout the gas cell.

This invention also provides for modular entry and exit windows whose design is such that different thicknesses of optical window materials can be used and the index of refraction of these materials can be compensated for with respect to the correct focal point on the window.

Further objects, features, and advantages of the invention will be apparent from the following detailed description when taken in conjunction with the accompanying drawings.

### BRIEF DESCRIPTION OF THE DRAWINGS

The invention will hereafter be described with reference to the accompanying drawings, wherein like numerals denote like parts, and:
Fig. 1 is a perspective view of the gas cell;
Fig. 2 is a top schematic cross-sectional view showing the beam as it passes between the mirrors in the gas cell;
Fig. 3 is an exploded cross-sectional side view of the gas cell taken generally along line 3-3 of Figure 1 with the end plates spaced from the central body;
Fig. 4 is a cross-sectional view taken generally along line 4-4 of Figure 1 showing the end plate having the integral objective mirrors; and
Fig. 5 is a cross-sectional view taken generally along line 5-5 of Figure 1 showing the end plate having the integral field mirror.

### DETAILED DESCRIPTION OF THE INVENTION

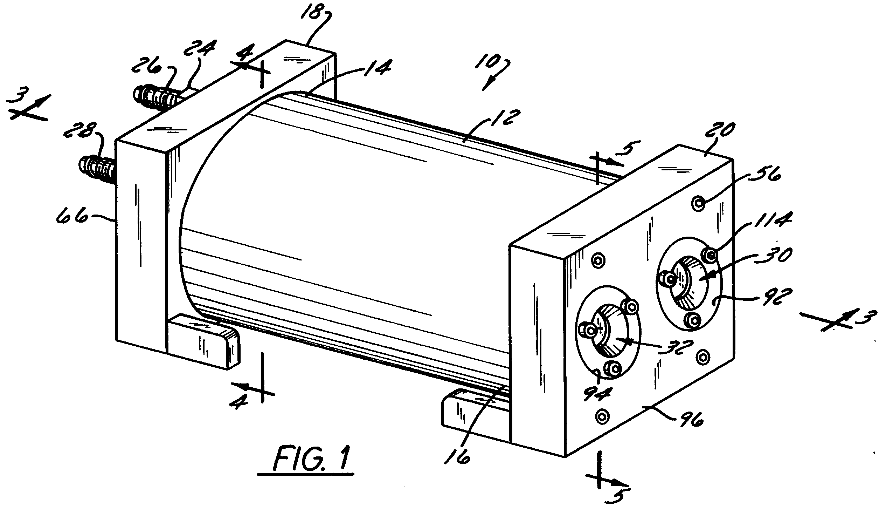

With reference to the drawings, a gas cell in accordance with the present invention is shown generally at 10 in Figure 1. Generally, the gas cell 10 includes a central body portion 12 having a first end 14, a second end 16, and an external wall 17. A first end plate 18 is affixed to the first end 14 and a second end plate 20 is affixed to the second end 16. The end plates 18 and 20 are sealed to the central body portion 12 so that a gas sample may be introduced into the interior of the gas cell 10 without any leakage of the gas sample. The gas cell 10 is particularly suited for use in conjunction with a Fourier transform infrared (FTIR) spectrometer, although the gas cell may be used with other types of spectrometers.

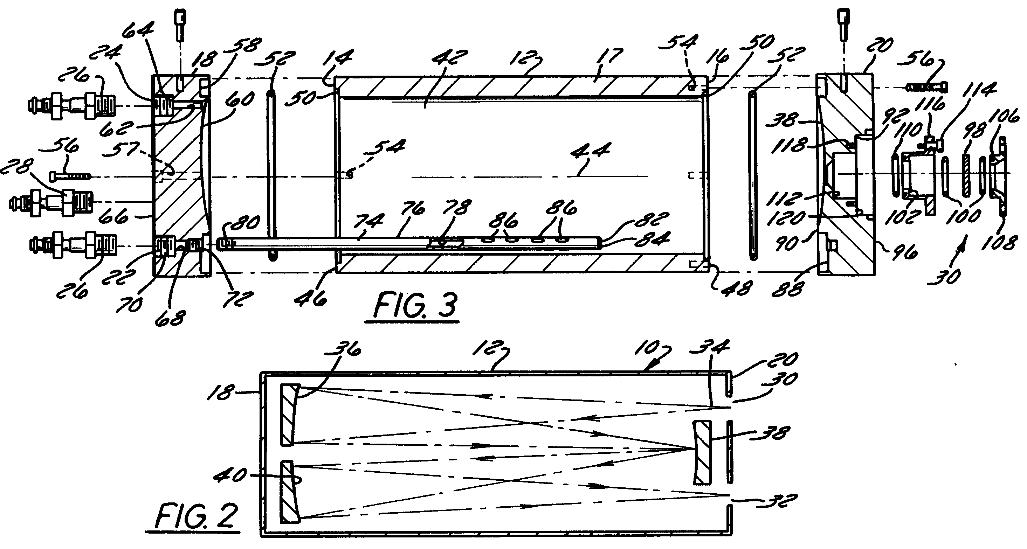

The gas sample is introduced into the gas cell 10 through an inlet 22 which is preferably an orifice formed through first end plate 18 (see Figure 3). Similarly, the gas sample is removed from the gas cell 10 through an outlet 24 which is also preferably an orifice formed through the first end plate 18. Additionally, a pair of socket connections 26 may be threadably engaged in the inlet 22 and outlet 24, respectively, so that the inlet and outlet may be connected to an appropriate gas pump (not shown). Also, a pressure relief connector 28 may be connected to a bore 29 through the end plate 18 to relieve pressure in the gas cell 10 if it exceeds a predetermined level.

As shown in the illustrated embodiment, the gas cell 10 includes an entrance window assembly 30 and an exit window assembly 32 through which an optical beam enters and exits the gas cell, respectively. Preferably, the window assemblies 30 and 32 include either barium fluoride (BaF₂) or potassium bromide (KBr) crystals; however, other appropriate window crystal materials, such as diamond, silicon, or zinc selenide, may be used.

To understand how the gas cell works, a simplified cross-sectional top view of the gas cell is shown in Figure 2. An optical beam 34, such as an infrared beam, is directed through the entrance window assembly 30 against a first concave objective mirror 36 integrally formed in the first end plate 18. The beam 34 diverges towards the first objective mirror 36, which reflects and focuses the beam 34 onto a concave field mirror 38 integrally formed in the second end plate 20 which, in turn, reflects the beam 34, diverging, towards a second objective mirror 40 integrally formed in the first end plate 18. The second objective mirror 40 either focuses the beam 34 through the exit window 32 as shown, or it reflects the beam 34 back towards the field mirror 38 for additional multiple passes.

In the example of Figure 2, a basic four pass system is disclosed in which the mirrors are optically oriented towards one another so that the beam 34 passes through the length of the gas cell 10 four times. By forming objective mirrors 36 and 40 and the field mirror 38 with slightly different optical orientations, various numbers of multiple passes can be achieved. In this manner, the path length over which the optical beam travels can be adjusted by replacing the end plate 18 with a different end plate having mirrors with appropriate optical orientation to direct the optical beam 34 through the gas cell 10 different numbers of times. However, the number of passes through the gas cell 10 prior to exiting through the exit window assembly 32 will typically be a multiple of four, since four passes are required to reflect the beam 34 back to the field mirror 38, from there to the first objective mirror 36, from there back to the field mirror 38, and then once again to the second objective mirror 40 before being reflected through the exit window assembly 32.

The preferred embodiment of the invention is shown in greater detail in the exploded cross-sectional view of Figure 3. As illustrated, the central body portion 12 is preferably cylindrical, having external wall 17 enclosing a hollow interior region 42 and a longitudinal axis 44. The hollow interior region 42 extends through the central body portion 12 along longitudinal axis 44 and through the first and second ends 14 and 16. The central body portion 12, as well as the hollow interior region 42, can have a variety of cross-sectional shapes, although a cylindrical cross-section is preferred for ease of manufacture. The central body portion may be made of a corrosion resistant metal, such as aluminum or stainless steel, but other materials such as glass may be used as appropriate.

The first end 14 includes a generally planar first datum surface 46 which preferably lies in a plane perpendicular to the longitudinal axis 44. Similarly, the second end 16 includes a second datum surface 48 which is generally planar and also disposed perpendicular to the longitudinal axis 44. Formed in or adjacent each datum surface 46 and 48 is an annular groove 50 configured to receive a seal 52, such as a resilient O-ring. The datum surfaces 46 and 48 preferably comprise the longitudinal ends of the external wall 17. Also, extending through each datum surface, 46 and 48, is a plurality of threaded bores 54 which extend into the external wall 17. Each threaded bore 54 is configured to receive a fastener 56 to rigidly affix the end plates 18 and 20 to central body portion 12. Although the preferred embodiment uses bolt type fasteners 56 each extending through a respective bore 57 in the end plates 18 and 20 and received in the threaded bore 54, many other methods of affixing the end plates 18 and 20 to the central body portion 12 may be used. For example, the end plates may include flanges having apertures through which bolts pass external to the central body portion 12 to connect the end plates directly to one another.

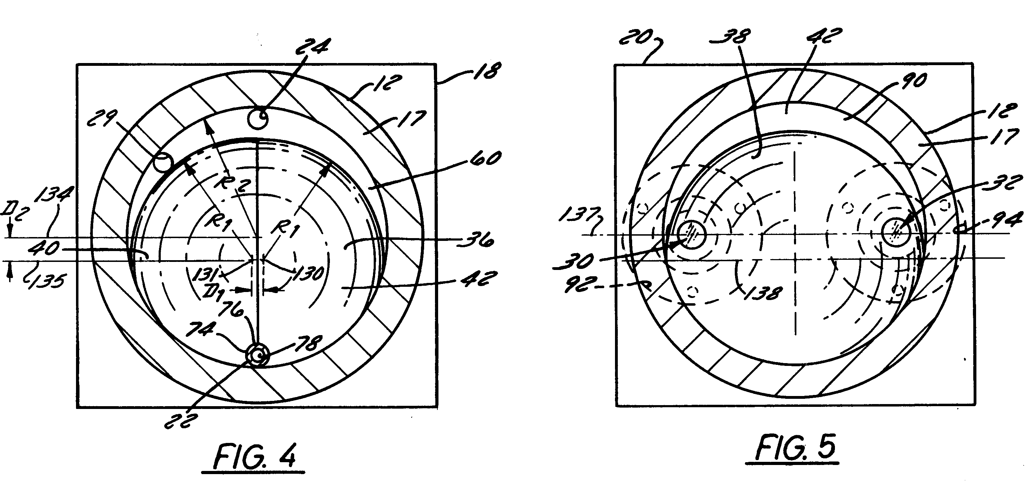

The first end plate 18 includes a generally planar inner reference surface 58 which abuts against the first datum surface 46 when it is tightened against the central body portion 12 by fasteners 56. The seal 52 is trapped between the central body portion 12 and first end plate 18 to prevent the escape of sample gas. As shown in Figure 4, the plate 18 includes the generally half-moon shaped concave objective mirrors 36 and 40, which are precision machined into an inner side 60 of the plate 18. The end plate 18 is preferably made from a metal, such as aluminum or stainless steel, in which the objective mirrors 36 and 40 are precision formed through replication or, preferably, by diamond turning machining. The mirrors 36 and 40 are formed to be at a predetermined location with respect to the reference surface 58. Each mirror is then preferably evaporative coated with a protected silver coating to provide a precise optical surface producing extremely minimal distortion of the optical beam 34 and a reflectivity above that of the machined metal (e.g., aluminum) surface. When the end plate 18 is affixed to the central body portion 12 by fasteners 56, and the reference surface 58 is abutted against the datum surface 46, the objective mirrors 36 and 40 are exactly located with respect to first datum surface 46. No adjustment of the objective mirrors is required or even possible. To change the optical orientation of the objective mirrors, an operator simply detaches the end plate 18 from the central body portion 12 and reattaches an alternate end plate 18 having mirrors formed with a slightly different predetermined optical orientation.

In the illustrated embodiment, the end plate 18 includes the sample gas outlet 24 passageway preferably having a narrow through-bore section 62 and an enlarged threaded section 64 for receiving the socket connection 26. The narrow through-bore 62 communicates between the inner side 60 and enlarged threaded section 64 which extends through an external surface 66 of the end plate 18 so that sample gas may flow through the end plate 18 and into the interior hollow region 42 of the gas cell 10. Similarly, the sample gas inlet 22 passageway includes a narrow through bore 68, which extends between the inner side 60 and an enlarged threaded section 70 which further extends through the external surface 66 for receiving one of the socket connections 26. Preferably, the through-bore 68 also includes an internal threaded region 72 configured to receive a gas distribution member 74. Pin-holes (not shown) may be precisely formed in the external surface 66 of the plate for fixturing of the plate during the machining operation in which the mirrors are formed in the solid metal plate.

The preferred gas distribution member 74 comprises a long, narrow tube having an external wall 76 enclosing an internal passageway 78 extending between a first threaded end 80 and a second, distal or sealed end 82. The threaded end 80 connects the gas distribution member 74 to the internal threaded region 72 of the sample gas inlet 22, thus allowing sample gas to pass through the inlet 22 and along the passageway 78. Although the preferred method of attachment is threaded engagement, gas distribution member 74 may be connected to the gas sample inlet 22 by any of a variety of ways known in the art. The sealed end 82 preferably includes a sealing wall 84 that blocks further longitudinal flow of the sample gas through the internal passageway 78. A plurality of apertures 86 extend through the external wall 76 in a radial direction. Thus, sample gas entering the inlet 22 moves longitudinally along the internal passageway 78 of the gas distribution member 74, and is distributed into the hollow interior region 42 through the radial apertures 86. In the illustrated embodiment, the gas distribution member 74 extends through the hollow interior region 42 generally along the external wall 41 parallel to the longitudinal axis 44.

The second end plate 20 includes an inner reference surface 88 which abuts against the second datum surface 48 when the end plate is tightened against the central body portion 12 by fasteners 56. The seal 52, disposed between the end plate 20 and central body portion 12, prevents any leakage of the gas sample from the hollow interior region 42. The end plate 20, which can be formed of metal such as aluminum or stainless steel, includes an integrally formed field mirror 38 formed in an inner side 90 of the end plate, as illustrated in Figure 5. The field mirror 38 may be formed by replication or, preferably, by diamond turning machining, and then evaporative silver coated, which is provided with a protective coating, to create a precise optical surface. As with the first end plate 18, the field mirror 38 is integrally machined into the end plate 20 at a predetermined location with respect to the reference surface 88. The location of the mirror 38 is thus fixed at a desired position with respect to the mirrors 36 and 40 once the end plate 20 is affixed to the central body portion 12 by the fasteners 56 and the reference surface 88 is abutted against the datum surface 48. Thus, an operator can easily service or switch the end plate 20 without the need for careful recalibration of the field mirror 38.

The abutment of the reference surfaces on the end plates 18 and 20 with the datum surfaces on the central body portion 12 determines the spacing between the field and objective mirrors as well as the tilt orientation of the mirrors with respect to the axis 44. The fasteners 56 fix the angular position of the mirrors with regard to rotation about the axis 44, although any other suitable means may be used, such as pins engaging holes, laterally engaging walls, external guides, etc.

Additionally, end plate 20 includes a first multi-tiered bore 92 for receiving the entrance window assembly 30 and a second multi-tiered bore 94 for receiving exit window assembly 32. The bores 92 and 94 each extend through the end plate 20 in a tiered concentric fashion between an external surface 96 and the inner side 90 of end plate 20. The bores 92 and 94 extend generally parallel to the longitudinal axis 44 and at a spaced distance from each other.

Window assemblies 30 and 32 preferably include the same components, so only one window assembly will be described and its description will apply equally to both window assemblies. Each window assembly includes a crystal disk or window 98, preferably made of barium fluoride (BaF₂) or potassium bromide (KBr) although other materials, including diamond, silicon, or zinc selenide, may be used where appropriate. Disposed concentrically with the crystal disk and one on each side of the crystal disk is a pair of O-rings 100. The O-rings 100 and the crystal disk 98 are squeezed between an inner retainer 102 having an annular flange 104 and an outer retainer 106 having an annular flange 108. The window assembly is then positioned in one of the multi-tiered bores 92 or 94, with an O-ring 110 positioned between the inner retainer 102 and an inner annular ledge 112 formed in the multi-tiered bore. The window assembly is affixed in its bore, preferably by a plurality of fasteners 114, which extend through a plurality of bores 116, each formed concentrically through annular flanges 104 and 108. The fasteners 114 are received by a plurality of threaded bores 118 disposed in a second annular ledge 120 in each multi-tiered bore.

The number of passes of the optical beam between the mirrors of the gas cell, and therefore the total pathlength of the beam through the sample gas, is determined by the positioning and dimensions of the mirrors 36, 38 and 40. For example, where the mirrors each have a spherical radius of 9.8425 inches, a minimum four passes through the cell (three reflections) would result in a total beam pathlength in the cell of about one meter. The horizontal spacing between the vertices of the spherical mirrors can be selected to determine the number of passes. The pertinent dimensions are shown in Figs. 4 and 5. These dimensions are the radii R₁ from the center points 130 and 131 of the mirrors 36 and 40, respectively, the horizontal spacing D₁ between the vertices of the mirrors 36 and 40, and the vertical spacing D₂ between the centerline 134 of the plate 18 and an imaginary line (or plane) 135 at the level of the vertices of the mirrors 36 and 40. The centerline 134 on the plate 18 is, when the gas cell is assembled, at the same height as the centerline 137 of the plate 20. The centerline 137 runs through the center of the windows 30 and 32. The vertex of the spherical mirror 38 is at the level of an imaginary line (or plane) 138 which is at the same level as the line or plane 135. The radius R₂ is the radius of the cylindrical internal bore of the body portion 17.

For an exemplary gas cell in which each of the mirrors 36, 38, and 40 has a spherical radius of 9.8425 inches, with the vertex of each mirror lying at the surface of the opposite mirror, an exemplary two meter pathlength cell (8 passes, 7 reflections) may have the following dimensions: R₁ = 1.625 inches, R₂ = 1.932 inches, D₁ = 0.7598 inch, and D₂ = 0.354 inch. An exemplary ten meter pathlength cell (40 passes, 39 reflections) may have the following dimensions: R₁ = 1.812 inches, R₂ = 1.932 inches, D₁ = 0.1582 inch, D₂ = 0.354 inch. The spacing between the center-points of the windows 30 and 32 in each case is 3.000 inches.

In the preferred embodiment, the bores 92 and 94 are formed so that the window assemblies 30 and 32 are set deep into the end plate 20 to ensure even heating and prevent condensation from forming on the windows. It will be appreciated that different window materials may be used for different applications, depending upon the pressure of the sample gas, the infrared wavelengths needed to characterize the sample gas, and the tendency, if any, of the sample to react with the window material. It will also be appreciated that the shape of the first and second objective mirrors 36 and 40, or the shape of the field mirror 38, or both, or, preferably, the thickness of the windows, may be altered to compensate for differences in the refractive index of different window materials, such that users can select a particular window thickness or composition by switching end plate(s) or, preferably, by switching window assemblies, without having to realign the mirrors. It will further be appreciated that interchanging end plate(s) also permits the pathlengths of the cell to be changed without having to realign the mirrors, merely by forming the correct shape into the mirrors.

It is understood that the invention is not confined to the particular embodiments set forth herein as illustrative, but embraces such modified forms thereof as come within the scope of the following claims.

## Claims

1. A gas cell for use with a spectrometer and through which an optical beam is folded back and forth a predetermined number of times to allow determination of the absorption spectra of the sample gas, comprising:
(a) a central body portion including a longitudinal axis, a first end and a second end, and a hollow interior extending therethrough along the axis;
(b) a first end plate affixed in sealing engagement with the central body portion, the first end plate including an integrally formed objective mirror which has a predetermined location on the first end plate;
(c) a second end plate affixed in sealing engagement with the central body portion, the second end plate including an integrally formed field mirror which has a predetermined location on the first end plate;
(d) means for aligning the first and second end plates to the central body portion such that the field mirror and the objective mirror are optically oriented towards each other in the hollow interior at desired positions;
(e) windows disposed in an end plate through which the optical beam enters and exits the hollow interior; and
(f) gas inlet and outlet passageways extending into communication with the hollow interior of the central body portion and through which sample gas enters and exits the hollow interior.

2. The gas cell of Claim 1 further comprising a gas sample distribution tube disposed in the hollow interior of the central body portion, wherein the tube includes an internal passageway in fluid communication with the gas inlet passageway and a radially extending apertures configured to distribute sample gas from the internal passage to the hollow interior.

3. The gas cell of Claim 1 wherein the means for aligning includes a substantially planar first datum surface on the first end of the central body portion, a substantially planar second datum surface on the second end of the central body portion, a reference surface on the first end plate abutting the first datum surface and a reference surface on the second end plate abutting the second datum surface, the objective mirror having a predetermined location with respect to the reference surface on the first end plate and the field mirror having a predetermined location with respect to the reference surface on the second end plate.

4. The gas cell of Claim 1 wherein the gas inlet and outlet passageways are formed in the first end plate and further comprising a gas sample distribution tube attached to the first end plate and having an internal passageway in communication with the gas inlet passageway, wherein the distribution tube extends into the hollow interior of the central body portion parallel to its longitudinal axis and includes radially extending apertures for distributing the sample gas from the internal passageway to the hollow interior of the central body portion.

5. The gas cell of any preceding claim, wherein the window comprises a first window through which the optical beam enters and a second window through which the optical beam exits.

6. The gas cell of any preceding claim, further comprising a second objective mirror optically oriented towards the field mirror.

7. A gas cell for use with a spectrometer to allow measurement of a trapped gas sample through which a beam is passed multiple times, comprising:
(a) a central body portion including a longitudinal axis, a hollow interior extending therethrough along the axis, a first end and a second end wherein the first end includes a substantially planar first datum surface and the second end includes a substantially planar second datum surface, each datum surface being oriented generally perpendicular to the axis;
(b) a first end plate having a reference surface and a first concave objective mirror and a second concave objective mirror, each mirror being formed into an inner side of the first end plate at a predetermined location with respect to the reference surface, wherein the first end plate sealingly abuts the central body portion with the reference surface abutting against the first datum surface to fix the objective mirrors in location with respect to the first datum surface;
(c) a second end plate having a reference surface and a concave field mirror formed into an inner side of the second end plate at a predetermined location with respect to the reference surface, wherein the second end plate sealingly abuts the central body portion with the reference surface abutting against the second datum surface to fix the field mirror in location with respect to the second datum surface;
(d) a gas inlet passageway for introducing a gas sample into the hollow interior and a gas outlet passageway for releasing the gas sample from the hollow interior;
(e) an inlet window through which the beam is admitted into the hollow interior of the body portion; and
(f) an outlet window through which the beam exits the hollow interior, wherein the objective mirrors and field mirror are optically oriented towards each other to reflect the beam back and forth through the hollow interior a predetermined number of times before it exits the hollow interior.

8. The gas cell of claim 7, wherein the end plates are formed of metal and the objective mirrors are integrally formed in the first end plate at least partially by diamond turning machining and wherein the field mirror is formed in the second end plate at least partially by diamond turning machining.

9. The gas cell of claim 7 or 8, wherein the inlet and outlet windows are each mounted in the second end plate.

10. The gas cell of claim 7, 8 or 9, wherein the gas inlet and outlet passageways are formed in the first end tube attached to the first end plate and having an internal passageway in communication with the gas inlet passageway, wherein the distribution tube extends into the hollow interior of the central body portion parallel to its longitudinal axis and includes radially extending apertures for distributing the sample gas from the internal passageway to the hollow interior of the central body portion.

11. The gas cell of claim 7, 8, 9 or 10, wherein the end plates are formed of metal and the objective mirrors and the field mirror are integrally formed in the first and second end plates, respectively, by precision machining.

12. The gas cell of any one of claims 7 to 11, wherein the first and second end plates are removably attached to the body portion by a plurality of bolts which are threadably received in the central body portion.

13. The gas cell of any one of claims 6 to 12, wherein the field mirror and first and second objective mirrors are oriented so that the optical beam passes through the hollow interior at least four times before exiting.

14. The gas cell of any preceding claim, further comprising a first sealing ring disposed between the first end plate and the central body portion and a second sealing ring disposed between the second end plate and the central body portion.

15. The gas cell of any preceding claim, wherein the or each window is made from potassium boromide, barium fluoride, diamond, silicon or zinc selenide.

16. The gas cell of any preceding claim, wherein the mirrors are each evaporative silver coated.

17. An improved gas sample cell of the type having end plates with a gas inlet passageway and a gas outlet passageway and field and objective mirrors thereon, and a central body portion engaged between the end plates to form an enclosed interior for holding a gas sample through which an optical beam is reflected multiple times between the mirrors to allow a determination of the absorption spectra of a sample in the interior of the cell, the improvement comprising:
a tube extending from an end plate into the interior of the sample cell, the tube having an outer wall enclosing an internal passageway, an attachment end of the tube in engagement with the gas inlet passageway to allow gas to flow into the internal passageway of the tube, a distal end of the tube including an end wall at least partially blocking the longitudinal flow of gas in the internal passage, and a plurality of apertures radially oriented and extending through the outer wall, wherein gas entering the internal passageway from the gas inlet passageway passes through the plurality of apertures and is distributed through the interior of the gas cell.
